# EUROPEAN PATENT SPECIFICATION

(11) **EP 0 915 114 B1**
(45) Date of publication and mention of the grant of the patent: **18.02.2004**
(21) Application number: 98120992.7
(22) Date of filing: 05.11.1998
(51) Int. Cl.: C08G 18/62, C09J 175/04

(54) **Adhesive polymer and method for preparing the same**
Klebstoffpolymer und sein Herstellungsverfahren
Polymère adhésif et son procédé de préparation

(30) Priority: 06.11.1997 US 965548
(43) Date of publication of application: 12.05.1999
(73) Proprietor: NITTO DENKO CORPORATION, Osaka (JP)
(72) Inventor: McGinniss, Vincent D., Sunbury, Ohio 43074 (US); Vijayendran, Bihma R., Columbus, Ohio 43201-2693 (US); Yamamoto, Michiharu c/o Nitto Denko Corporation, Ibaraki-shi, Osaka (JP)
(74) Representative: Grünecker, Kinkeldey, Stockmair & Schwanhäusser Anwaltssozietät

(56) References cited:
- EP-A- 0 632 075
- WO-A-96/30421
- US-A- 4 446 246
- US-A- 4 822 530

## Description

The present invention relates to an adhesive polymer and a method for preparing the same. More specifically, it relates to an adhesive polymer formed from a telechelic polymer, used for adhesives, paints and like applications, and a method for preparing the same.

Conventional free radical polymerization leads to synthesis of polymers with a fairly broad molecular weight distribution, Mw/Mn (weight average molecular weight/number average molecular weight), or polydispersity, in the range of 2.5 to 6. Number average molecular weight (Mn) relies on the number of molecules in the polymer, while weight average molecular weight (Mw) relies on the weight of the individual molecules. See, e.g., Solomon, The Chemistry of Organic Film Formers, pp. 25, et seq., Robert E. Krieger Publishing Co., Inc., Huntington, NY( 1997), the disclosure of which is expressly incorporated herein by reference. The basic theory that applies to the control of the growth of the polymer chains and Mw/Mn ratios in a free-radical initiated polymerization reaction is well reported in the literature by P. J. Flory, J. Am. Chem. Soc., Vol. 96, page 2718 (1952).

State of the art practice used to prepare polymers with a narrow molecular weight distribution in the range of about 1.05 to 1.4 rely on living polymerization techniques, such as anionic and cationic polymerization. These ionic living polymerization techniques have several limitations including, for example, restrictions on the types of monomers that can be polymerized, low temperature and purity process requirements, the inability to synthesize high molecular weight polymers, etc. Because of these constraints, ionic polymerization processes are limited to the synthesis of polymers based on styrene, isoprene, isobutylene, and like monomers to produce synthetic elastomers and thermoplastic rubbers.

Telechelic polymers prepared from either living polymers or condensation polymers, such as polystyrene, for example, tends to be of low molecular weight, typically on the order of several hundreds to several thousands (e.g.,' 500 to 10,000). This low molecular weight limitation makes conventional telechelic polymers impractical for a variety of applications including, for example, adhesives.

The present invention has been made to overcome the above-described defects of the prior art.

Accordingly, one object of the present invention is to provide an adhesive polymer capable of providing an adhesive composition to which both excellent adhesive strength and bonding strength have been imparted.

Another object of the present invention is to provide a method for preparing the adhesive polymer.

The present inventors have conducted extensive study and research efforts in order to overcome the above-described problems of the prior art. As a result, those problems could be overcome by the following embodiments.

According to one embodiment of the present invention, there is provided an adhesive polymer comprising a telechelic polymer having a narrow molecular weight distribution (Mw/Mn) and being chain-extended with a polyisocyanate, wherein the telechelic polymer is prepared by polymerizing one or more radically polymerizable monomers in the presence of a transition metal, a ligand, and a polymerization initiator, and wherein OH groups are contained in one or more of the polymerization initiator, the polymerizable monomers and a polymerization terminator.

According to another embodiment of the present invention, there is provided a method for preparing an adhesive polymer, which comprises the steps of:
(a) forming a telechelic polymer having a narrow molecular weight distribution (Mw/Mn) by polymerizing one or more radically polymerizable monomers in the presence of a transition metal, a ligand, and a polymerization initiator; wherein OH groups are contained in one or more of the polymerization initiator, the polymerizable monomers and a polymerization terminator, and
(b) chain-extending the resulting telechelic polymer with a polyisocyanate to form the adhesive polymer.

The step (a) of the method for preparing an adhesive polymer according to the present invention forms a telechelic polymer having a narrow molecular weight distribution (Mw/Mn), for example, about 1 to 3, by polymerizing one or more radically polymerizable monomers in the presence of a transition metal, a ligand, and a polymerization initiator.

According to recent work on radical polymerization in the presence of a transition metal, a ligand, and a polymerization initiator, high molecular weight polymers based on acrylic monomers, vinyl monomers, and other common monomers, which exhibit a fairly narrow molecular weight distribution of about 1.05 to 1.5, are produced. Thus, this living radical polymerization technique is shown to be potentially utilizable. Molecular weights up to 10⁵ have been reported to have been synthesized by the living radical polymerization technique. The content is described in the following articles as references: Pattern, et.al., "Radical Polymerization Yielding Polymer with Mw/Mn ~1.05 by Homogeneous Atom Transfer Radical Polymerization", Polymer Preprints, pp.575 to 576, No.37 (March 1996); Wang, et al., "Controlled/"Living" Radical Polymerization. Halogen Atom Transfer Radical Polymerization Promoted by a Cu(I)/Cu(II) Redox Process", Macromolecules, 1995, 28, 7901 to 7910 (October 15, 1995); and PCT/US96/03302, International Publication No. WO96/30421, published 3 October 1996.

In the above-described polymerization step, OH groups are contained in one or more of the polymerization initiator, the polymerizable monomers and a polymerization terminator and are preferably contained in any one of the following materials:
(i) the polymerization initiator, polymerizable monomer or polymerization terminator,
(ii) a combination of the polymerization initiator and polymerizable monomer,
(iii) a combination of the polymerization initiator and polymerization terminator, and
(iv) a combination of the polymerizable monomer and polymerization terminator.

The telechelic polymer thus formed is then chain extended with a chain extender, such as a polyisocyanate, to form an adhesive polymer.

It becomes apparent that the adhesive properties of the chain extended polymers is dependent primarily upon the weight average molecular weight of the telechelic polymer and the hydroxyl monomers and/or polymerization initiator used in forming the telechelic polymers. Data demonstrating such adhesive properties are clearly set forth herein. In the present invention, "telechelic" polymers are polymers that contain reactive end groups. Further, in the present invention, "polymers" include homopolymers and copolymers, which may be block, random, gradient, star, graft (or "comb"), hyperbranched, or dendritic.

In the telechelic polymer formation step in the method of the present invention, conditions of a living radical polymerization such as atom or group transfer radical polymerization can be employed. Conditions of such a living radical polymerization are described in, for example, the articles cited above, and the transition metal, the ligand, and the initiator described in those articles are emcompssed in the method of the present invention.

Preferred transition metals are Cu⁺¹ and Co⁺¹, although many other transition metals have been disclosed in the art and may find advantage in the present invention. Cu⁺¹ halides, for example, are described with respect to catalyzed reactions of organic polyhalides with vinyl unsaturated compounds in Bellus, Pure and Applied Chemistry, Vol. 57, No. 12, pp. 1827 to 1833 (1985) and, therefore, are well known. Complexing transition metals with organic ligands as part of the polymerization initiator system is described in U.S. Patent No. 4,446,246. The complexes of Cu⁺¹ halide-bipyridine with active organic halide compounds, that react with vinyl unsaturated compounds are described in Udding, et al., J. Organic Chemistry, Vol. 59, pp. 1993 to 2003 (!994). Organocobalt porphyrin complexes (alkyl cobaloximes) in the polymerization of acrylates are described in Wayland, et al., J. Am. Chem. Soc., Vol. 116, pp. 7943 to 7966 (1994). Cu⁺¹ carboxylate complexes formed from thiophene carboxylates are described in Weij, et al., Polymer Preprits, Vol. 38, No. 1, pp.685 to 686 (April 1997).

The generation of radical intermediates by reacting some transition metal species, including salts and/or complexes of Cu, Ru, Fe, V, Nb, and others, with alkyl halides, R-X, is well described. (see Bellus, Pure & Appl. Chem., 1985, 57, 1827; Nagashima, et al., J. Org., Chem., 1993, 58, 464; Seijas, et al., Tetrahedron, 1992, 48(9), 1637; Nagashima, et al., J. Org. Chem., 1992, 57, 1682; Hayes, J. Am. Chem. Soc., 1988, 110, 5533; Hirao, et al., Syn. Lett., 1990, 217; Hirao, et al., J. Synth. Org. Chem., (Japan), 1994, 52(3), 197; Iqbal, et al., Chem. Rev., 94, 519 (1994); Kochi, Organometallic Mechanisms and Catalysis, Academic Press, New York, 1978). Moreover, it is also known that R-X/transition metal species-based redox initiators such as Mo(CO)₆/CHCl₃, Cr(CO)₆/CCl₄, Co₄(CO)₁₂/CCl₄, Ni[P(OPh)₃]₄/CCl₄ promote radical polymerization (see Bamford, Comprehensive Polymer Science, Allen, et al., editors, Pergam-on; Oxford, 1991, vol.3, p. 123 ). The participation of free radicals in these redox initiator-promoted polymerizations was supported by end-group analysis and direct observation of radicals by ESR spectroscopy (see Bamford, Proc. Roy. Soc., 1972, A, 326, 431).

Ligands useful in the telechelic polymer formation step in the method according to the present invention also have been disclosed in the literatures, such as set forth' above. As such ligands, preferably halides can be mentioned. However, bipyridyls, mercaptides, triflates (CuOSO₂CF₃: J. Am. Chem. Soc., 95, 1889 (1973)), olefin and hydroxyl complexes (see Cotton and Wilkinson, Advanced Inorganic Chemistry, 3rd Ed. Chapter 23, John Wile & Sons, New York, NY(1972); "Inorganic and Organometallic Photochemistry", M.S., Wrighton, Editor, ACS-Advances in Chemistry Series, 168(1978); and Srinivasan, J. Am. Chem. Soc., 85, 3048(1963)) also can be used.

Polymerization initiators also have been disclosed in the literatures. Representative of such initiators include, for example, 2-hydroxyethyl 2-bromopropionate, 4-hydroxybutyl 2-bromopropionate, methyl 2-bromopropionate, 1-phenyl ethyl chloride, 1-phenyl ethyl bromide, chloroform, carbon tetrachloride, 2-chloropropionitrile, lower alkyl (C₁-C₆) esters of 2-halo-lower alkane acids (C₁-C₆) (e.g., ethyl 2-bromoisobytyrate), α,α'-dichloroxylene, α,α'-dibromoxylene, hexakis(α-bromomethyl)benzene, and the like. Obviously, halide initiators have been taught by the art to be preferred and such initiators serve quite efficaciously in the present invention. It should be noted, further, that photopolymerization initiators also can be used, such as taught by M.P. Greuel, "Living Free-Radical Polymerization Using Alkyl Cobaloximes as Photoinitiators", Doctoral Thesis, University of Acron, December 1992.

Referring to radically polymerizable monomers, broadly, such monomers include any ethylenically unsaturated monomer or oligomer which can be polymerized in the presence of the initiator. In adhesive technology, acrylic or acrylate compounds find wide acceptance in industry. Another suitable class of ethylenically unsaturated compounds are vinyl compounds, while there exists other various kinds of compounds comprising ethylenically unsaturated bonds such as ethylenically unsaturated polyester oligomers. For terminating or capping the polymer ends with OH functionality, monomers modified to contain such functional groups are used in the polymerization step of the present invention.

Referring with more particularity to reactive acrylic or acrylate monomers or oligomers, a variety of monomers find use in accordance with the present invention. Monoacrylates include acrylates comprising alkyl chains or cycloalkyl chains having 1 to 22 carbon atoms such as butyl acrylate, 2-ethylhexyl acrylate, allyl acrylate, amyl acrylate, lauryl acrylate, isopropyl acrylate and the similar compounds thereof. Monomethacrylates include methacrylates comprising alkyl chains or cycloalkyl chains having 1 to 22 carbon atoms such as benzyl methacrylate, stearyl methacrylate, decyl methacrylate, cyclohexyl methacrylate, the similar compounds thereof, and mixtures thereof. The monomers for modification include (meth)acrylamides, mono- or diesters of maleic acid, glycidyl (meth)acrylate, N,N-dimethylaminoethyl (meth)acrylate, N,N-dimethylaminopropyl (meth)acrylate, N-vinyl pyrrolidone, acrylonitrile and (meth)acryloyl morpholine. The above monomers are merely representative and are not limitative of the list of acrylate and methacylate monomers suitable for use in the present invention as those skilled in the art will appreciate.

Other suitable reactive compounds for use in the present invention include, for example, acrylated epoxy resins, acrylated silicone resins, acrylated polyurethane resins, and the similar resins thereof, and mixtures thereof. Such acrylate-functional compounds are well known in the art and little more about them need be stated here.

Hydroxyl-containing acrylic monomers include hydroxyl derivatives of those monomers named above, and the similar compounds, and mixtures thereof.

More specifically, 2-hydroxyethyl (meth)acrylate, 3-hydroxypropyl (meth)acrylate, 4-hydroxybutyl (meth)acrylate, and 6-hydroxyhexyl (meth)acrylate can be mentioned.

In order to obtain desired adhesive properties, it is appropriate to further use hydroxyl group-containing polymerizable monomers which are copolymerizable with the radically polymerizable monomers in an amount of 10% by weight or less, and preferably 5 % by weight or less, based on the weight of the sum of the above-described acrylic monomers.

Further, although the time of adding the above-described hydroxyl group-containing polymerizable monomers is not particularly limited, for obtaining desired adhesive properties it is desirable to introduce the same as late as possible during the polymerization. Namely, the above-described hydroxyl group-containing polymerizable monomers are desirably introduced after the polymerization rate reaches 70% or more. The later are added the hydroxyl group-containing polymerizable monomers in the polymerization process, the closer to the polymer terminal are introduced hydroxyl groups. Thus, hydroxyl groups are to be telechelically introduced.

For example, in the case of initiating polymerization, using hydroxyl group-containing initiators makes it possible to simultaneously initiate polymerization and introduce a hydroxyl group into one end of the resulting polymer. Specifically, esters having bromine or chlorine at the α-position or styrene derivatives having a hydroxyl group in the molecule can be used as the above-described hydroxyl group-containing initiators, unless they do not interfere with progress of the living radical polymerization. Further, halogenated compounds selected from 2-hydroxyethyl 2-bromo(or chloro)propionate, 4-hydroxybutyl 2-bromo(or chloro)propionate, 2-hydroxyethly 2-bromo(or chloro)-2-methylpropionate and 4-hydroxybutyl 2-bromo(or chloro)-2-methylpropionate can also similarly be used.

Alternatively, hydroxyl compounds such as allyl alcohol can be used to terminate polymerization (as polymerization terminator), thereby introducing a hydroxyl group to the end.

Mono- and di-hydroxyl functional telechelic polymers are preferably used in the present invention.

Polyisociates are conventional in nature and preferably are diisocyanates, and examples thereof include hexamethylene diisocyanate, toluene diisocyanate (TDI), diphenylmethane diisocyanate (MDI), m- and p-phenylene diisocyanate, bitolylene diisocyanate, cyclohexane diisocyanate (CHDI), bis-(isocyanatomethyl)cyclohexane (H₆XDI), dicyclohexylmethane diisocyanate (H₁₂XDI), dimer acid diisocyanate (DDI), trimethyl hexamethylene diisocyanate, lysine diisocyanate and its methyl ester, isophorone diisocyanate, methyl cyclohexane diisocyanate, 1,5-naphthalene diisocyanate, xylylene diisocyanate or methylol derivatives thereof or tricyanuric derivatives, xylene diisocyanate or methylol derivatives thereof, polymethylene polyphenyl isocyanates, chlorophenylene-2,4-diisocyanate, and similar compounds thereof and mixtures thereof. Triisocyanates, polyfunctional isocyanates, and block derivatives of those are also well known and can be used to advantage. As with conventional urethane reactions, there should be a slight to moderate excess of isocyanate equivalents compared to the hydroxyl equivalents of the telechelic polymers being chain extended.

The chain extended telechelic polymers find wide use in formulating adhesives. If required and necessary, the adhesive composition of the present invention may contain various additives which are compounded with general adhesive compositions, such as tackifying resins, fillers, antioxidants and pigments. The adhesive composition of the present invention is coated on a support and dried. Further, the above-described cross-linking treatment is applied thereto. Thus, there can be obtained adhesion sheets in the form of a tape or a sheet, having been subjected to crosslinking treatment, which have adhesive layer on at least one surface of a support. The adhesive layer generally each has a thickness of 10 to 100 µm. In such a case, the crosslinking treatment can be effected within a short time. Examples of the support which can be used include various kinds of plastic films, papers, laminate papers, metal foils and foamed sheets. In this application, all units are in the metric systems unless otherwise expressly indicated.

The present invention will be described in detail by reference to the following examples, but the invention is not limited thereto.

### EXAMPLES

### General Procedures

### Raw Materials

Butyl acrylate (BA), 4-hydroxybutyl acrylate (HBA), methyl 2-bromopropionate (2-MPN), 1-bromoethyl benzene (1-BEB), allyl alcohol (allyl-OH), 5-hydroxypentene (pentene-OH), copper bromide (CuBr), and bipyridine were purchased from Aldrich Chemicals and used without further purification. 2-Bromopropionic acid and anhydrous ethylene glycol were also purchased from Aldrich Chemicals.

### Hydroxyl-Containing Indicator Synthesis Methods

### 2-Hydroxyethyl 2-Bromopropionate (2-H2PN)

Dicyclohexylcarbodiimide (4.1 g, 20 mmol), anhydrous ethylene glycol (5.0 g, 81 mmol), and pyridine (1 ml, 12 mmol) were charged into a vial. Acetone (14 ml) and 2-bromopropionic acid (1.5ml, 16.7 mmol) were added while cooling the vial down with an ice bath to control the exothermic reaction. After stirring the vial's contents overnight, undissolved by-products were removed by filtration. To the filtered reaction mixture were added ethyl acetate (20 ml) and saturated NaCl water (15 ml), followed by shaking well. The reaction mixture separated into 2 layers. The upper ethyl acetate layer was washed with dilute HCl once and saturated NaCl water (15 ml) two more times and then dried over MgSO₄. After removing MgSO₄, ethyl acetate was rotary evaporated to obtain a crude product. This crude product was purified by silica gel chromatography (eluent: ethyl acetate : hexane = 1 : 1 by weight) to yield 1.4 g (43% yield) product.

### 4-Hydroxybutyl 2-Bromopropionate (4-H2PN)

The forgoing procedure was repeated except for using 1,4-butanediol as the starting material instead of anhydrous ethylene glycol.

### Examples 1 to 12

### Typical Polymerization Method-Table 1

### 2-MPN, HBA (Example 2)

BA (12.8 g, 100 mmol) was charged into a four-neck flask equipped with a mechanical stirrer, N₂ inlet, cooling condenser, and rubber septum. Bipyridine (400 mg, 2.56 mmol) and Cu(I)Br (123mg, 0.86 mmol) were added to the flask. The flask was purged with N₂ for at least 1 hour, after which 2-MPN indicator (96 µl, 0.86 mmol) was injected into the flask through the rubber septum at ambient temperature. The reaction mixture then was stirred while being heated up to 110 to 120°C for 6 hours.

After verifying that the conversion ratio (dried polymer weight/neat reaction polymer weight) exceeded 95%, HBA (130 µl, 0.94 mmol) was bulk added through the rubber septum at 110 to 120°C. The reaction solution then was heated for another 3 hours, after which heating ceased. The crude polymer was diluted with ethyl acetate (50ml) and then washed with diluted aqueous HCl three times and saturated aqueous NaCl three times followed by drying with anhydrous MgSO₄. After filtering out MgSO₄ and removing ethyl acetate, the polymer residue was dried by a vacuum pump at 50.C overnight.

### 2-H2PN, Pentene-OH (Example 12)

BA (25.6g, 200 mmol) was charged into a four-neck flask equipped with a mechanical stirrer, N₂ inlet, cooling condenser, and rubber septum. Bipyridine (840 mg, 5.38 mmol) and Cu(I)Br (257 mg, 1.79 mmol) were added to the flask. The flask was purged with N₂ for at least 1 hour, after which the bromo indicator 2-H2PN (353 mg, 1.79 mmol) was injected into the flask through the rubber septum at ambient temperature. The reaction mixture then was stirred for 6 hours while being heated up to 110 to 120°C.

After verifying that the conversion ratio (dried polymer weight/neat reaction polymer weight) exceeded 95%, pentene OH (1.54 g, 17.9 mmol) was bulk added through the rubber septum at 110 to 120°C. The reaction solution then was heated overnight, after which heating ceased. The crude polymer was diluted with ethyl acetate (50ml) and then washed with diluted aqueous HCl three times and saturated aqueous NaCl three times followed by drying with anhydrous MgSO₄. After filtering out MgSO₄ and removing ethyl acetate, the polymer residue was dried overnight by a vacuum pump at 50°C.

**Table 1**

| Hydroxyl-Containing Polymers | | | | | | | |
|---|---|---|---|---|---|---|---|
| Ex. No. | Monomer | Initiator | OH Comonomer | Terminator | Mn (calculated) | Mw | Mw/Mn |
| 1 (Com. Ex) | BA (12.8g, 100mmol) | 2-MPN (0.27mmol) | | | 43,567 (47,650) | 69,701 | 1.60 |
| | | | | | | | |
| 2 | BA (12.8g, 100mmol) | 2-MPN (0.90mmol) | HBA (0.94mmol) | | 15,538 (14,450) | 34,491 | 2.22 |
| | | | | | | | |
| 3 | BA (12.8g, 100mmol) | 1-BEB (0.88mmol) | HBA (0.94mmol) | | 16,170 (14,580) | 30,319 | 1.88 |
| | | | | | | | |
| 4 | BA (25.6g, 200mmol) | 1-BEB (1.79mmol) | HBA (2.67mmol) | | 16,041 (14,580) | 33,274 | 2.08 |
| | | | | | | | |
| 5 | BA (12.7g, 100mmol) | 2-NPN (0.9mmol) | | allyl-OH (1.47mmol) | 14,677 (14,400) | 28,399 | 1.94 |
| | | | | | | | |
| 6 | BA (25.6g, 200mmol) | 1-BEB (1.76mmol) | | allyl-OH (excess) | 15,209 (14,600) | 26,923 | 1.77 |
| | | | | | | | |
| 7 | BA (12.8g, 100mmol) | 2-H2PN (0.9mmol) | | | 13,255 (14,500) | 31,482 | 3.02 |
| | | | | | | | |
| 8 | BA (12.8g. 100mmol) | 4-H2PN (0.89mmol) | | | 12.850 (14,600) | 31,193 | 2.43 |
| | | | | | | | |
| 9 | BA (12.8g. 100mmol) | 4-H2PN (0.89mmol) | HBA (0.91mmol) | | 15.103 (14,800) | 26,861 | 1.78 |
| | | | | | | | |
| 10 | BA (25.6g, 200mmol) | 4-H2PN (1.78mmol) | | allyl-OH (29.4mmol) | 14,956 (14,700) | 33,234 | 2.22 |
| | | | | | | | |
| 11 | BA (12.8g. 100mmol) | 2-H2PN (1.0mmol) | | allyl-OH (110mmol) | 84,926 (126,000) | 214,519 | 2.53 |
| | | | | | | | |
| 12 | BA (25.6g, 200mmol) | 2-H2PN (1.79mmol) | | pentene-OH (17.9mmol) | 21,897 (14,600) | 34,889 | 1.60 |
| *The ratio of initiator/copper bromide/bipyridine is determined as 1 mol equivalent/1 mol equivalent/3 mol equivalent. | | | | | | | |

Example 1 synthesis is a comparative example for showing a control run in that neither the initiator nor any monomer contained hydroxy functionality, nor was the polymer terminated with a hydroxy terminating monomer. The polymers synthesized in Examples 3-4 both were synthesized using hydroxy functional co-monomers, although the initiator did not contain hydroxy functionality. The polymers synthesized in Examples 5-6 were both initiated with non-hydroxy functional initiators and neither contained any hydroxy functional co-monomers, each was polymer was terminated with ally alcohol. The polymers synthesized in Examples 7-8 were initiated with a hydroxy functional initiator, although none of the monomers contained hydroxy functionality.

The polymers synthesized in Examples 9-10 both were initiated with hydroxy functional monomers. In Example 9, however, a hydroxy functional co-monomer was used and in Example 10, the polymer was terminated with ally alcohol. Finally, the polymers synthesized in Examples 11-12 were both initiated with a hydroxy functional initiator and terminated with either allyl alcohol (Example 11) or with pentene alcohol (Example 12).

### Fxamples 13 to 24

### Typical Chain Fxtension Procedure-Table 2

### Fxample 14 (below)

The polymer synthesized in Example 2 (Mn=15,538, 1.35 g, 0.087 mol, 0.092 mmol OH equivalents) was charged into a reaction vial and diluted with tetrahydrofuran (THF) (1.6 ml). Added thereto were 1 wt% dibutyltin dilaurate in THF (120 mg) and 10 wt% 4,4'-methylenebis(phenyl isocyanate) (120 mg, 0.048 mmol, 0.096 mmol NCO equivalents, NCO/OH ratio in reaction mixture of 1.0) in THF followed by stirring for 2 hours under heating at 60°C. The molecular weight of the resulting product was determined by gel permeation chromatography using polystyrene as the standard.

Following the general procedures detailed above, the polymers synthesized as reported in Table 1 were chain extended with 4,4'-methylenebis(phenyl isocyanate) to produce polymers which have utility in formulation adhesive compositions. The chain extension results are reported in Table 2, below.

**Table 2**

| Chain Extension by Reaction of Polymers of Table 1 (Examples 1 to 12) with Diisocyanates | | | | | | | | |
|---|---|---|---|---|---|---|---|---|
| Chain Extension Ex. No | Table 1 Ex. No | Data of Table 1 | | | NCO/OH (eq) | Data of Chain Extension | | |
| | | Mn | Mw | Mw/Mn | | Mn | Mw | Mw/Mn |
| 13 | 1 | 43,567 | 69,701 | 1.60 | - | - | - | Not reacted |
| 14 | 2 | 15,538 | 34,491 | 2.22 | 1.0 | 25,036 | 50,558 | 2.02 |
| 15 | 3 | 16,170 | 30,319 | 1.88 | 1.2 | 22,983 | 108,529 | 4.72 |
| 16 | 4 | 16,041 | 33,274 | 2.08 | 1.2 | 23.761 | 287,627 | 12.11 |
| 17 | 5 | 14,677 | 28,399 | 1.94 | 1.2 | 15,865 | 35,338 | 2.23 |
| 18 | 6 | 15,209 | 26,923 | 1.77 | 1.4 | 18,523 | 33,706 | 1.82 |
| 19 | 7 | 13,255 | 31,482 | 3.02 | 1.4 | 18,274 | 55,090 | 3.02 |
| 20 | 8 | 12,850 | 31,193 | 2.43 | 1.2 | 16,607 | 57,084 | 3.44 |
| 21 | 9 | 15,103 | 26,861 | 1.78 | 2.0 | 46,587 | 259,875 | 5.18 |
| 22 | 10 | 14,956 | 33,234 | 2.22 | 1.5 | 27,148 | 73,219 | 2.70 |
| 23 | 11 | 84,926 | 214,519 | 2.53 | 1.4 | 106,001 | 334,315 | 3.15 |
| 24 | 12 | 21,897 | 34,889 | 1.60 | 1.8 | 48,438 | 252,259 | 5.22 |

The results reported in Table 2 indicates that a variety of hydroxy-containing polymers can be produced that have Mw/Mn values ranging between about 1.6 and 3.0. These results further demonstrate that chain extension of the hydroxyl-containing polymers in Table 1 produces new polymers that have Mw/Mn values that range between 1.82 and 12.11. Although, the Mw/Mn values of the chain extended polymers do not exhibit the narrowness in number that their corresponding hydroxyl functional telechelic polymers from they are derived do, such chain extended polymers indeed display very unusual adhesive properties as data presented below will demonstrate. Polymers that do not contain hydroxyl functionality (Example 1 in Table 1) do not react with the diisocyanate chain extenders.

### Comparative production Example 1

A mixture comprising butyl acrylate (182 g, 1420 mmol), 2-mercaptoethanol (0.5 g, 3.64 mmol), 6-hydroxyhexyl acrylate (1.13 g, 6.56 mmol) and ethyl acetate (400 ml) was charged into a four-neck flask equipped with a mechanical stirrer, N₂ inlet, cooling condenser, and rubber septum. Then, azoisobutylonitrile (0.5 g) was added to the flask. The resulting reaction system was heated at 60°C for 5 hours so that a polymer in an oil state was prepared. Finally, ethyl acetate was distilled off and/or heated under a reduced pressure (60°C) so that a polymer in an oil state could be prepared.

The number-average molecular weight of the resulting polymer, Mn was 22.7 K, while the weight average molecular weight, Mw was 57.5 K and Mw/Mn was 2.53.

### Comparative production Example 2

A mixture comprising butyl acrylate (182 g, 1420 mmol), 2-mercaptoethanol (0.1 g, 1.3 mmol), 6-hydroxyhexyl acrylate (1.13 g, 6.56 mmol) and ethyl acetate (400 ml) was charged into a four-neck flask equipped with a mechanical stirrer, N₂ inlet, cooling condenser, and rubber septum. Then, azoisobutylonitrile (0.5 g) was added to the flask. The resulting reaction system was heated at 60°C for 5 hours so that a polymer in an oil state was prepared. Finally, ethyl acetate was distilled off and/or heated under a reduced pressure (60°C) so that a polymer in an oil state could be prepared.

The number-average molecular weight of the resulting polymer, Mn was 122.7 K, while the weight average molecular weight, Mw was 320.6 K and Mw/Mn was 2.62.

The non-chain extended polymers synthesized in Examples 11 and 12 (Table 1); the chain extended versions (same MDI isocyanate as in the previous examples) thereof synthesized in Examples 23 and 24 (Table 2); and polymers produced in Comparative Production Examples 1 and 2 were tested for their adhesive qualities by measuring their tack by the Polyken Tack Test (see, for example, U.S. Patent No. 4,183,836 for the test details). These results demonstrate that the inventive polymers have good tack. That is, as shown in Table 3, polyken tack shown in Examples 23 and 24 is high compared with that of Comparative Production Example 2, in spite of having substantially the same molecular weight. Although the reason of showing high tack is not apparent, it can be guessed that in the polymers obtained according to the present invention, hydroxyl groups are more telechelically introduced and the polymer chains are linearly extended by isocyanates compared with polymers produced according to a conventional method.

**Table 3**

| Test No. | Mn | Mw | Mw/Mn | Polyken Tak(grams/cm²) |
|---|---|---|---|---|
| 1-Example 11 | 84,926 | 214,519 | 2.53 | 261 |
| | | | | |
| 1-Example 23 | 106,001 | 334,315 | 3.15 | 128 |
| | | | | |
| 2-Example 12 | 21,897 | 34,889 | 1.60 | 320 |
| | | | | |
| 2-Example 24 | 48,438 | 252,259 | 5.22 | 284 |
| | | | | |
| Comparative production Example 1 | 22,732 | 57,467 | 2.53 | 142 |
| | | | | |
| Comparative production Example 2 | 122,157 | 320,608 | 2.62 | 55 |

### Fxample 25

The polymer prepared by the method shown in Example 2 (Mn=15,538, 13.5 g, 0.87 mmol; OH equivalent 0.92 mmol) was diluted to about 30% with ethyl acetate. 1% by weight of dibutyltin dilaurate THF solution (1.2 g) and 10% by weight 4,4-methylene-bis(phenylisocyanate)THF solution (1.2 g, 0.48 mmol; NCO equivalent 0.96 mmol; OH/NCO ratio 1.0) were added to the diluted solution, followed by mixing to form a uniform solution. The solution thus obtained was coated on a PET film having a thickness of 27 µm by means of an applicator so that the polymer thickness after drying may be 20 µm. The coated product was dried at 120°C for 5 minutes and 50°C overnight, whereby an adhesive sheet was produced.

### Example 26

An adhesive sheet was prepared according to the method shown in Example 25 except that instead of 4,4-methylene-bis(phenylisocyanate), a trimethylol propane derivative of tolylene diisocyanate was used.

### Example 27

An adhesive sheet was prepared according to the method shown in Example 2 using the polymer prepared in Example 9.

### Example 28

An adhesive sheet was prepared according to the method shown in Example 2 using the polymer prepared in Example 10.

### Comparative Example 3

An adhesive sheet was prepared according to the method shown in Example 2 using the polymer prepared in Comparative Production Example 1.

### Comparative Example 4

An adhesive sheet was prepared according to the method shown in Example 2 using the polymer prepared in Comparative Production Example 2.

Adhesion properties (peel strength and creep) of the polymers for adhesion thus obtained were determined. The determination methods of these adhesion properties are set forth below.

### Peel strength

The adhesion sheet prepared as in the above was cut to the size of 20 mm x 80 mm, which was then contact-bonded on a SUS-304 plate (40 mm x 100 mm) by reciprocating a rubber roller having the weight of 2 kg. The resulting product was allowed to stand for 30 minutes at room temperature. Then, peeling of the product thus obtained was effected at the rate of 300 mm/min. by means of a tensile tester (180° peel) and the power required for peeling was determined (average of two samples).

### Creep determination

The adhesion sheet prepared as in the above was adhered on a Bakelite plate in the adhesion area of 10 mm x 20 mm. The load of 500 g was applied thereto at 40°C and a moved distance per hour was determined. Generally, it is known that the smaller is this movement, the higher the cohesion force is.

**Table 4**

| | Tack (g/20mm) | Creep(mm/hr) |
|---|---|---|
| Example 25 | 518 | 0.28 |
| | | |
| Example 26 | 469 | 0.15 |
| | | |
| Example 27 | 531 | 0.29 |
| | | |
| Example 28 | 523 | 0.30 |
| | | |
| Comparative Example 3 | 392 | 0.31 |
| | | |
| Comparative Example 4 | 378 | 0.22 |

According to these results, it can be seen that the polymer obtained according to the present invention has desirable tack properties. As shown in Table 4, tack properties shown in Examples 25 to 28 shown in balanced in peel strength and creep compared with those shown in Comparative Examples 3 and 4. That is, the polymer of the present invention has an increased tackiness compared with. Comparative Examples while it has substantially the same or rather improved creep property (0.15 to 0.30 mm/hr). Thus, it can be seen that the polymer of the present invention is desirable as a polymer for adhesives. Although the reason of this is also not clear, it can be guessed that in the polymers obtained according to the present invention, hydroxyl groups are more telechelically introduced compared with those prepared according to a conventional polymerization method.

The adhesive polymer prepared' according to the method of the present invention can make an adhesive composition having excellent adhesive strength and cohesive force by mixing the same with the adhesive composition.

## Claims

1. An adhesive polymer comprising a telechelic polymer having a narrow molecular weight distribution (Mw/Mn) and being chain-extended with a polyisocyanate, wherein the telechelic polymer is prepared by polymerizing one or more radically polymerizable monomers in the presence of a transition metal, a ligand, and a polymerization initiator, and wherein OH groups are contained in one or more of the polymerization initiator, the polymerizable monomers and a polymerization terminator.

2. An adhesive polymer as claimed in claim 1, wherein said hydroxyl group is included in any one of the following materials:
(i) said polymerization initiator, polymerizable monomer or polymerization terminator,
(ii) a combination of said polymerization initiator and polymerizable monomer,
(iii) a combination of said polymerization initiator and polymerization terminator, and
(iv) a combination of said polymerizable monomer and polymerization terminator.

3. An adhesive polymer as claimed in claim 1, wherein a combination of said transition metal and ligand is Cu⁺¹ halide-bipyridine complex.

4. An adhesive polymer as claimed in claim 1, wherein said polymerization initiator is selected from the group consisting of 2-hydroxyethyl 2-bromo(or chloro)propionate, 4-hydroxybutyl 2-bromo(or chloro)propionate, methyl 2-bromo(or chloro)propionate, 1-phenyl ethyl chloride(bromide), and combinations thereof.

5. An adhesive polymer as claimed in claim 1, wherein said polyisocyanate is selected from the group consisting of diphenylmethane diisocyanate (MDI), hexamethylene diisocyanate (HDI), toluene diisocyanate (TDI), cyclohexane diisocyanate (CHDI), bis-(isocyanatemethyl)benzene (XDI), m- and p-phenylene diisocyanate, isophorone diisocyanate, trimethylol derivatives or tricyanuric derivatives of those, and combinations thereof.

6. An adhesive polymer as claimed in claim 1, wherein said polymerizable monomer is selected from the group consisting of an alkyl or cycloalkyl(meth)acrylate having 1 to 22 carbon atoms and the hydroxyl group derivatives of said monomer.

7. A method for preparing an adhesive polymer, which comprises the steps of:
(a) forming a telechelic polymer having a narrow molecular weight distribution (Mw/Mn) by polymerizing one or more radically polymerizable monomers in the presence of a transition metal, a ligand, and a polymerization initiator; wherein OH groups are contained in one or more of the polymerization initiator, the polymerizable monomers and a polymerization terminator, and
(b) chain-extending the resulting telechelic polymer with a polyisocyanate to form the adhesive polymer.

8. A method for preparing an adhesive polymer as claimed in claim 7, wherein said hydroxyl group is included in any one of the following materials:
(i) said polymerization initiator, polymerizable monomer or polymerization terminator,
(ii) a combination of said polymerization initiator and polymerizable monomer,
(iii) a combination of said polymerization initiator and polymerization terminator, and
(iv) a combination of both polymerizable monomer and polymerization terminator.

9. A method for preparing an adhesive polymer as claimed in claim 7, wherein a combination of said transition metal and ligand is Cu⁺¹ halide-bipyridine complex.

10. A method for preparing an adhesive polymer as claimed in claim 7, wherein said polymerization initiator is selected from the group consisting of 2-hydroxyethyl 2-bromo(or chloro)propionate, 4-hydroxybutyl 2-bromo(or chloro)propionate, methyl 2-bromo(or chloro)propionate, 1-phenyl ethyl chloride(bromide), and combinations thereof.

11. A method for preparing an adhesive polymer as claimed in claim 7, wherein said polyisocyanate is selected from the group consisting of diphenylmethane diisocyanate (MDI), hexamethylene diisocyanate (HDI), toluene diisocyanate (TDI), cyclohexane diisocyanate (CHDI), bis-(isocyanatemethyl)benzene (XDI), m- and p-phenylene diisocyanate, isophorone diisocyanate, trimethylol derivatives or tricyanuric derivatives of those, and combinations thereof.

12. An adhesive polymer as claimed in claim 7, wherein said polymerizable monomer is selected from the group consisting of an alkyl or cycloalkyl(meth)acrylate having 1 to 22 carbon atoms and the hydroxyl group derivatives of said monomer.

## Patentansprüche

1. Klebstoffpolymer, enthaltend ein telecheles Polymer mit einer engen Molekulargewichtsverteilung (Mw/Mn), das mit einem Polyisocyanat kettenverlängert ist, worin das telechele Polymer hergestellt ist durch Polymerisieren eines oder mehrerer radikalisch polymerisierbarer Monomerer in Gegenwart eines Übergangsmetalls, eines Liganden und eines Polymerisationsinitiators, und worin OH-Gruppen in einem oder mehreren des Polymerisationsinitiators, der polymerisierbaren Monomere und eines Polymerisationsabbrechers enthalten sind.

2. Klebstoffpolymer wie in Anspruch 1 beansprucht, worin die Hydroxylgruppe in einem der folgenden Materialien enthalten ist:
(i) dem Polymerisationsinitiator, dem polymerisierbaren Monomer oder dem Polymerisationsabbrecher,
(ii) einer Kombination des Polymerisationsinitiators und des polymerisierbaren Monomers,
(iii) einer Kombination des Polymerisationsinitiators und des Polymerisationsabbrechers, und
(iv) einer Kombination des polymerisierbaren Monomers und des Polymerisationsabbrechers.

3. Klebstoffpolymer wie in Anspruch 1 beansprucht, worin eine Kombination des Übergangsmetalls und des Liganden ein Cu⁺¹-halogenid-Bipyridin-Komplex ist.

4. Klebstoffpolymer wie in Anspruch 1 beansprucht, worin der Polymerisationsinitiator ausgewählt ist aus der Gruppe bestehend aus 2-Hydroxyethyl-2-brom(oder chlor)-propionat, 4-Hydroxybutyl-2-brom(oder chlor)propionat, Methyl-2-brom(oder chlor)propionat, 1-Phenylethylchlorid(bromid) und Kombinationen davon.

5. Klebstoffpolymer wie in Anspruch 1 beansprucht, worin das Polyisocyanat ausgewählt ist aus der Gruppe bestehend aus Diphenylmethandiisocyanat (MDI)), Hexamethylendiisocyanat (HDI), Toluoldiisocyanat (TDI), Cyclohexandiisocyanat (CHDI), Bis-(isocyanatmethyl)benzol (XDI), m- und p-Phenylendiisocyanat, Isophorondiisocyanat, Trimethylolderivaten oder Tricyanurderivaten von diesen und Kombinationen davon.

6. Klebstoffpolymer wie in Anspruch 1 beansprucht, worin das polymerisierbare Monomer ausgewählt ist aus der Gruppe bestehend aus einem Alkyl- oder Cycloalkyl(meth)acrylat mit 1 bis 22 Kohlenstoffatomen und den Hydroxylgruppenderivaten dieses Monomers.

7. Verfahren zur Herstellung eines Klebstoffpolymers, welches die Schritte umfasst:
(a) Bilden eines telechelen Polymers mit einer engen Molekulargewichtsverteilung (Mw/Mn) durch Polymerisieren eines oder mehrerer radikalisch polymerisierbarer Monomerer in Gegenwart eines Übergangsmetalls, eines Liganden und eines Polymerisationsinitiators, worin OH-Gruppen in einem oder mehreren des Polymerisationsinitiators, der polymerisierbaren Monomere und eines Polymerisationsabbrechers enthalten sind, und
(b) Kettenverlängern des erhaltenen telechelen Polymers mit einem Polyisocyanat zur Bildung des Klebstoffpolymers.

8. Verfahren zur Herstellung eines Klebstoffpolymers wie in Anspruch 7 beansprucht, worin die Hydroxylgruppe in einem der folgenden Materialien enthalten ist:
(i) dem Polymerisationsinitiator, dem polymerisierbaren Monomer oder dem Polymerisationsabbrecher,
(ii) einer Kombination des Polymerisationsinitiators und des polymerisierbaren Monomers,
(iii) einer Kombination des Polymerisationsinitiators und des Polymerisationsabbrechers, und
(iv) einer Kombination von sowohl dem polymerisierbaren Monomer als auch dem Polymerisationsabbrecher.

9. Verfahren zur Herstellung eines Klebstoffpolymers wie in Anspruch 7 beansprucht, worin eine Kombination des Übergangsmetalls und des Liganden ein Cu⁺¹-halogenid-Bipyridin-Komplex ist.

10. Verfahren zur Herstellung eines Klebstoffpolymers wie in Anspruch 7 beansprucht, worin der Polymerisationsinitiator ausgewählt ist aus der Gruppe bestehend aus 2-Hydroxyethyl-2-brom(oder chlor)propionat, 4-Hydroxybutyl-2-brom(oder chlor)-propionat, Methyl-2-brom(oder chlor)propionat, 1-Phenylethylchlorid(bromid) und Kombinationen davon.

11. Verfahren zur Herstellung eines Klebstoffpolymers wie in Anspruch 7 beansprucht, worin das Polyisocyanat ausgewählt ist aus der Gruppe bestehend aus Diphenylmethandiisocyanat (MDI), Hexamethylendiisocyanat (HDI), Toluoldiisocyanat (TDI), Cyclohexandiisocyanat (CHDI), Bis-(isocyanatmethyl)benzol (XDI), m- und p-Phenylendiisocyanat, Isophorondiisocyanat, Trimethylolderivaten oder Tricyanurderivaten von diesen und Kombinationen davon.

12. Verfahren zur Herstellung eines Klebstoffpolymers wie in Anspruch 7 beansprucht, worin das polymerisierbare Monomer ausgewählt ist aus der Gruppe bestehend aus einem Alkyl- oder Cycloalkyl(meth)acrylat mit 1 bis 22 Kohlenstoffatomen und den Hydroxylgruppenderivaten dieses Monomers.

## Revendications

1. Polymère adhésif comprenant un polymère téléchélique ayant une distribution étroite de masse moléculaire (Mw/Mn) et ayant une chaîne étendue avec un polyisocyanate, dans lequel le polymère téléchélique est préparé en polymérisant un ou plusieurs monomères polymérisables radicalairement en présence d'un métal de transition, d'un ligand, et d'un initiateur de polymérisation, et dans lequel les groupes OH sont contenus dans un ou plusieurs de l'initiateur de polymérisation, des monomères polymérisables et d'un terminateur de polymérisation.

2. Polymère adhésif tel que revendiqué dans la revendication 1, dans lequel ledit groupe hydroxyle est compris dans l'un quelconque des matériaux suivants :
(i) lesdits initiateur de polymérisation, monomère polymérisable ou terminateur de polymérisation,
(ii) une combinaison desdits initiateur de polymérisation et monomère polymérisable,
(iii) une combinaison desdits initiateur de polymérisation et terminateur de polymérisation, et
(iv) une combinaison desdits monomère polymérisable et terminateur de polymérisation.

3. Polymère adhésif tel que revendiqué dans la revendication 1, dans lequel une combinaison dudit métal de transition et du ligand est un complexe d'halogénure-bipyridine Cu⁺¹.

4. Polymère adhésif tel que revendiqué dans la revendication 1, dans lequel ledit initiateur de polymérisation est choisi dans le groupe constitué par le 2-bromo (ou chloro) propionate de 2-hydroxyéthyle, le 2-bromo (ou chloro) propionate de 4-hydroxybutyle, le 2-bromo (ou chloro) propionate de méthyle, le chlorure (ou bromure) de 1-phényléthyle, et leurs combinaisons.

5. Polymère adhésif tel que revendiqué dans la revendication 1, dans lequel ledit polyisocyanate est choisi dans le groupe constitué par le diphénylméthane diisocyanate (MDI), l'hexaméthylène diisocyanate (HDI), le toluènediisocyanate (TDI), le cyclohexanediisocyanate (CHDI), le bis-(isocyanateméthyl)benzène (XDI), le m- et p-phénylènediisocyanate, l'isophoronediisocyanate, des dérivés de triméthylol ou des dérivés tricyanuriques de ceux-ci, et leurs combinaisons.

6. Polymère adhésif tel que revendiqué dans la revendication 1, dans lequel ledit monomère polymérisable est choisi dans le groupe constitué par un (méth)acrylate d'alkyle ou de cycloalkyle ayant 1 à 22 atomes de carbone et les dérivés du groupe hydroxyle dudit monomère.

7. Procédé de préparation d'un polymère adhésif, qui comprend les étapes consistant à :
(a) former un polymère téléchélique ayant une distribution étroite de masse moléculaire (Mw/Mn) en polymérisant un ou plusieurs monomères polymérisables radicalairement en présence d'un métal de transition, d'un ligand, et d'un initiateur de polymérisation ; où les groupes OH sont contenus dans un ou plusieurs de l'initiateur de polymérisation, des monomères polymérisables et d'un terminateur de polymérisation, et
(b) étendre la chaîne du polymère téléchélique résultant avec un polyisocyanate pour former le polymère adhésif.

8. Procédé de préparation d'un polymère adhésif tel que revendiqué dans la revendication 7, dans lequel ledit groupe hydroxyle est compris dans l'un quelconque des matériaux suivants :
(i) lesdits initiateur de polymérisation, monomère polymérisable ou terminateur de polymérisation,
(ii) une combinaison desdits initiateur de polymérisation et monomère polymérisable,
(iii) une combinaison desdits initiateur de polymérisation et terminateur de polymérisation, et
(iv) une combinaison desdits monomère polymérisable et terminateur de polymérisation.

9. Procédé de préparation d'un polymère adhésif tel que revendiqué dans la revendication 7, dans lequel une combinaison dudit métal de transition et du ligand est un complexe d'halogénure-bipyridine Cu⁺¹.

10. Procédé de préparation d'un polymère adhésif tel que revendiqué dans la revendication 7, dans lequel ledit initiateur de polymérisation est choisi dans le groupe constitué par le 2-bromo (ou chloro) propionate de 2-hydroxyéthyle, le 2-bromo (ou chloro) propionate de 4-hydroxybutyle, le 2-bromo (ou chloro) propionate de méthyle, le chlorure (ou bromure) de 1-phényléthyle, et leurs combinaisons.

11. Procédé de préparation d'un polymère adhésif tel que revendiqué dans la revendication 7, dans lequel ledit polyisocyanate est choisi dans le groupe constitué par le diphénylméthane diisocyanate (MDI), l'hexaméthylène diisocyanate (HDI), le toluènediisocyanate (TDI), le cyclohexanediisocyanate (CHDI), le bis-(isocyanateméthyl)benzène (XDI), le m- et p-phénylènediisocyanate, l'isophoronediisocyanate, des dérivés de triméthylol ou des dérivés tricyanuriques de ceux-ci, et leurs combinaisons.

12. Procédé de préparation d'un polymère adhésif tel que revendiqué dans la revendication 7, dans lequel ledit monomère polymérisable est choisi dans le groupe constitué par un (méth)acrylate d'alkyle ou de cycloalkyle ayant 1 à 22 atomes de carbone et les dérivés du groupe hydroxyle dudit monomère.
